# EUROPEAN PATENT SPECIFICATION

(11) **EP 2 857 661 B1**
(45) Date of publication and mention of the grant of the patent: **31.01.2018**
(21) Application number: 13797518.1
(22) Date of filing: 20.05.2013
(51) Int. Cl.: F02D 23/00, F02B 37/00, F02B 37/12, F02B 37/18, F02B 37/24, F02B 39/16, F02D 43/00, F02D 45/00, F02D 41/12, F02D 41/00

(54) **INTERNAL COMBUSTION ENGINE AND CONTROL METHOD THEREOF**
VERBRENNUNGSMOTOR UND STEUERUNGSVERFAHREN DAFÜR
MOTEUR À COMBUSTION INTERNE ET SON PROCÉDÉ DE COMMANDE

(30) Priority: 30.05.2012 JP 2012123250
(43) Date of publication of application: 08.04.2015
(73) Proprietor: Isuzu Motors, Ltd., Shinagawa-Ku Tokyo 140-8722 (JP)
(72) Inventor: TAKAO,Takafumi, Tochigi-shi Tochigi 329-4424 (JP); HASHIMOTO,Hirofumi, Fujisawa-shi Kanagawa 252-0881 (JP); IIMURA,Sousuke, Fujisawa-shi Kanagawa 252-0881 (JP); HIRANO,Syuuichi, Fujisawa-shi Kanagawa 252-0881 (JP)
(74) Representative: WSL Patentanwälte Partnerschaft mbB
(86) International application number: PCT/JP2013/063937
(87) International publication number: WO 2013/179935

(56) References cited:
- EP-A2- 1 484 497
- EP-A2- 1 674 698
- JP-A- 2005 083 283
- JP-A- 2005 240 756
- JP-A- 2009 156 197
- JP-A- 2009 156 197
- US-A1- 2007 068 158
- US-A1- 2009 077 968

## Description

### TECHNICAL FIELD

The present invention relates to an internal combustion engine provided with a turbocharger having a turbine which is arranged in an exhaust gas passage and a compressor which is arranged in an intake gas passage and driven by the turbine, and avoiding a surging state of the compressor, and a control method thereof.

### BACKGROUND ART

Conventionally, an energy of exhaust gas is effectively used by arranging a turbocharger which feeds compressed air into an engine by high-speed rotating a turbine by the exhaust gas discharged from the engine and driving a compressor by turning force of the turbine.

The turbocharger includes a so-called variable turbocharger (which may be also called as a variable wind turbocharger or a VGS turbocharger) which increases a supercharging efficiency and generates appropriate boost pressure by controlling a nozzle vane installed to a turbine side of the turbocharger in correspondence to rotating speed of the engine, and a waste gate type turbocharger which is provided with a valve mechanism regulating an inflow amount to a turbine by flow dividing a part of the exhaust gas, a so-called waste gate valve, controls rotating speed of the turbocharger itself, obtains stable boost pressure (boost pressure), and protects an engine and the turbocharger itself from damage.

In the meantime, the engine (the internal combustion engine) is provided with variable devices such as an EGR valve which is arranged in an EGR passage recirculating the exhaust gas, and an intake throttle (hereinafter, refer to as IN/TH) which is arranged in an intake gas passage, in addition to the nozzle vane of the variable turbocharger or the waste gate valve of the waste gate type turbocharger (hereinafter, collectively called as TRB). Generally, opening degrees of the variable devices are controlled by using an opening map which is based on a fuel injection amount (load) and an engine speed.

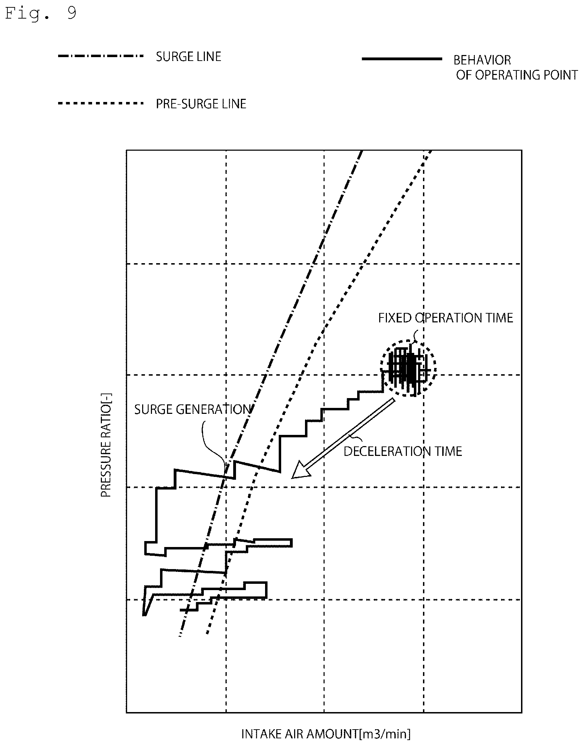

During vehicle deceleration going with decrease of an accelerator opening degree, an operation region (behavior of an operating point) of a compressor of a turbocharger moves to a left side in the drawing, as shown in Fig. 9, due to decrease of a TRB opening degree, increase of an EGR valve opening degree and decrease of an IN/TH opening degree which change in correspondence to the change of the fuel injection amount.

An operation region of the compressor includes a normally driving region which is positioned in a right side of a pre-surge line, a region which generates surge sound between the pre-surge line and a surge line, and a surge region which is positioned in a left side of the surge line. During the vehicle deceleration, the operation region of the compressor goes beyond the pre-surge line, and finally goes beyond the surge line so as to enter into the surge region, so that there is a problem that flow-back sound is generated from the intake gas duct of the vehicle in addition to the surge sound. Further, when the operation region of the compressor is in the surge region, there is a problem that the turbocharger is damaged by self-excited vibration.

One of reasons why the operation region of the compressor enters into the surge region during the vehicle deceleration is as follows. Namely, since the EGR valve opening degree is increased and the TRB opening degree is decreased in correspondence to the decrease of the fuel injection amount, the EGR gas flow rate is transitionally increased, and a new intake air amount is decreased. The other reason is as follows. Namely, the new intake air flow rate is decreased by decreasing the IN/TH opening degree in correspondence to the decrease of the fuel injection amount during the vehicle deceleration. As a result, the operation region of the compressor moves to the left side in the drawing (the low flow rate side) shown in Fig. 9, and enters into the region which goes beyond the surge line, and the compressor enters a surging state.

As a device which avoids the surging state of the turbocharger, there are a device which decreases an EGR amount from an amount of normal time by an EGR device during a specific operation state which requires to decrease a fuel injection amount in comparison with a normal time, and increases a turbine nozzle opening degree of the turbocharger from that of the normal time (refer, for example, to patent document 1), and a device which is provided with a turbocharger with a variable diffuser, and sets a target opening degree of a diffuser vane within a range which does not go beyond a surge limit, based on a map which is defined by a relationship with the engine speed and the boost pressure (refer, for example, to patent document 2) .

The devices can avoid the surging state of the turbocharger by suppressing rapid lowering of the pressure ratio before and after the compressor during the vehicle deceleration. On the other hand, new problems arise.

The device described in the patent document 1 controls the opening degree of the EGR valve closer to a closing side in relation to the opening degree which is defined at the normal operation time, and controls the opening degree of the turbine nozzle closer to an opening side, during the vehicle deceleration. Particularly, when the engine speed is high, excessive increase of the EGR rate and excessive increase of the boost pressure are caused, and other performances such as a fuel consumption and an exhaust gas are affected.

The device described in the patent document 2 controls the diffuser vane by using an opening map which is different from that of the normal operation time. The control method using a plurality of opening maps can suppress the excessive change such as the device described in the patent document 1, but on the other hand, it is necessary to refer to a plurality of opening maps, and the control is complicated due to the increase of the man hour.
US 2007/068158 relates to a method for controlling an engine having an intake manifold and an exhaust manifold, where an exhaust gas recirculation path with a valve is provided between said intake and exhaust manifold, and the engine has a turbocharger. The method comprises during at least one decreased engine output condition, increasing opening of the exhaust gas recirculation valve and adjusting exhaust expansion through a turbine of the turbocharger to decrease expansion through the turbocharger and thereby reduce a likelihood of turbocharger surge.
EP 1 484 497 A2 relates to a turbocharged engine comprising an EGR unit having an EGR passage linking an intake passage and an exhaust passage and an EGR valve provided in the EGR passage. The engine further comprises deceleration deciding unit for deciding as to whether a vehicle decelerates, and intake air release unit for opening the EGR valve and causing part of the intake air present in the intake passage to flow into the exhaust passage through the EGR passage when the deceleration deciding unit decides that the vehicle is decelerating.
JP 2009 156197 A1 relates to a control device for a variable turbocharger being capable of preventing its operating zone from entering into a surge zone during deceleration by accelerator-off, and of preventing damages of a compressor. When an operating zone of a compressor is in a surge dangerous zone, and an accelerator change ratio ΔAcc is changed to the accelerator closing direction at a rapid deceleration determination value ΔAcc0 or above, a vane opening maintaining control is executed to prohibit a vane closing control corresponding to the reduction of engine load, and maintains the vane opening in the present condition for a predetermined period.

### PRIOR ART DOCUMENT

### PATENT DOCUMENTS

Patent Document 1: Japanese patent application Kokai publication No. 2005-240756
Patent Document 2: Japanese patent application Kokai publication No. 2007-132232
Patent Document 3: United States patent application US 2007/068158 A1
Patent Document 4: European patent application EP 1 484 497 A2
Patent Document 5: Japanese patent application JP 2009 156197 A1

### SUMMARY OF THE INVENTION

### PROBLEM TO BE SOLVED BY THE INVENTION

The present invention is made by taking the problems mentioned above into consideration, and an object of the present invention is to provide an internal combustion engine which can prevent surge generation of a turbocharger and generation of flow-back sound during vehicle deceleration without affecting other performances such as the fuel consumption and the exhaust gas, and a control method thereof.

### MEANS FOR SOLVING THE PROBLEMS

An internal combustion engine according to the present invention for achieving the object mentioned above is an internal combustion engine comprising:
a turbocharger having a turbine arranged in an exhaust gas passage and a compressor arranged in an intake gas passage and driven by the turbine;
a turbine regulation switching device regulating an exhaust gas flow rate to be supplied to the turbine; and
a control device controlling an opening degree of the turbine regulation switching device based on an operation state of the internal combustion engine and a first opening map, characterized in that
when the control device determines whether or not the compressor enters a surging state during vehicle deceleration publication No. 2005-240756
Patent Document 2: Japanese patent application Kokai publication No. 2007-132232

### SUMMARY OF THE INVENTION

### PROBLEM TO BE SOLVED BY THE INVENTION

The present invention is made by taking the problems mentioned above into consideration, and an object of the present invention is to provide an internal combustion engine which can prevent surge generation of a turbocharger and generation of flow-back sound during vehicle deceleration without affecting other performances such as the fuel consumption and the exhaust gas, and a control method thereof.

### MEANS FOR SOLVING THE PROBLEMS

An internal combustion engine according to the present invention for achieving the object mentioned above is an internal combustion engine comprising:
a turbocharger having a turbine arranged in an exhaust gas passage and a compressor arranged in an intake gas passage and driven by the turbine;
a turbine regulation switching device regulating an exhaust gas flow rate to be supplied to the turbine; and
a control device controlling an opening degree of the turbine regulation switching device based on an operation state of the internal combustion engine and a first opening map, characterized in that
when the control device determines whether or not the compressor enters a surging state during vehicle deceleration and determines that the compressor enters the surging state,
the control device includes a surge avoidance unit configured to:
   acquire a first target opening degree based on the operation state and the first opening map, as a surge avoidance control for avoiding the compressor from entering the surging state and, if the first target opening degree is smaller than a predetermined surge avoiding first target opening degree, control the turbine regulation switching device to the surge avoiding first target opening degree, and
   control the turbine regulation switching device to the first target opening degree, if the first target opening degree is not less than the surge avoiding first target opening degree.

According to the structure, when the compressor is determined to enter the surging state in future, the opening degree of the turbine regulation switching device can be controlled to the surge avoiding turbine regulation switching device opening degree or more which can avoid the surging state of the compressor. Therefore, it is possible to prevent in advance the operation region of the compressor from entering into the surge region. As a result, it is possible to reduce the flow-back sound from the intake gas duct and to prevent damage on the turbocharger.

Further, since the opening map at the normal operation time is not changed, or the opening map for avoiding the surging state is not used, it is possible to avoid in advance the compressor from entering the surging state during the vehicle deceleration based on the easy control with less man hour, without affecting the other performances such as the fuel consumption and the exhaust gas. In addition, since the opening degree is not controlled to be more than necessary when the engine speed and the fuel injection amount are large, it is possible to suppress the excessive increase of the boost pressure and deterioration in response of the turbocharger in the re-acceleration time.

The turbine regulation switching device here means a nozzle vane (also called as a diffuser vane) of the turbine, or a waste gate valve of a bypass passage which bypasses the turbocharger.

Further, in the internal combustion engine mentioned above, when the surge avoiding first target opening degree is set to the opening degree which is closer to the closing side than the opening degree at which the opening degree of the turbine regulation switching device is fully open, it is possible to secure the response of the turbocharger at the re-acceleration time.

In addition, in the internal combustion engine mentioned above, the control device may be provided with a unit configured to control an opening degree of an EGR valve regulating an exhaust gas flow rate recirculating from an exhaust gas upstream side of the turbine based on an operation state of the internal combustion engine and a second opening map, and the surge avoidance unit may be provided with a device configured to acquire a second target opening degree based on the operation state and the second opening map, control the EGR valve to the surge avoiding second target opening degree if the second target opening degree is greater than a predetermined surge avoiding second target opening degree, and control the EGR valve to the second target opening degree if the second target opening degree is equal to or less than the surge avoiding second target opening degree, as a surge avoidance control which avoids the compressor from entering the surging state, when the compressor is determined to enter the surging state. In this case, since it is possible to decrease the EGR gas flow rate, and suppress decrease of the new intake air amount, in addition to the control of the turbine regulation switching device, it is possible to avoid in advance the compressor from entering the surging state.

Further, in the internal combustion engine mentioned above, the control device may be provided with a surge avoidance determination unit configured to determine deceleration of the vehicle for each predetermined determination time and determines whether or not the compressor enters the surging state based on the boost pressure of the turbocharger and the engine speed, in which a surge avoidance timer which maintains the surge avoidance control of the surge avoidance unit until a predetermined surge avoidance time elapses from a time point that the surge avoidance determination unit determines that the compressor enters the surging state, and the surge avoidance timer is provided with a device configured to maintain the surge avoidance unit until the surge avoidance time elapses from a time point that the surge avoidance determination unit lastly determines that the compressor enters the surging state during a lapse of the surge avoidance time. In this case, it is possible to determine whether or not the compressor enters the surging state even in progress of the surge avoidance unit, and it is possible to always pay serious attention to the latest surge determination timing. Therefore, it is possible to reliably avoid the compressor from entering the surging state.

Further, when the surge avoidance time is set to a time for which the pressure ratio before and after the compressor sufficiently lowers, specifically about 0 to 5 seconds, the surge avoidance unit can be carried out for a comparatively short time, and it is possible to prevent the surge generation and the generation of the flow-back sound of the turbocharger at the deceleration, without affecting the other performances such as the fuel consumption and the exhaust gas.

The determination time for which the surge avoidance determination unit is carried out is set to be shorter than the surge avoidance control time since the surge avoidance determination unit is necessarily executed at least once within the operating time of the surge avoidance unit. For example, when the surge avoidance determination unit is performed during operation of the surge avoidance unit, and it is determined to be in the surging state, the surge avoidance unit is carried out again from that time point during a period of the surge avoidance time.

Further, a control method of an internal combustion engine for achieving the object mentioned above is a control method of an internal combustion engine,
including a turbocharger having a turbine arranged in an exhaust gas passage and a compressor arranged in an intake gas passage and driven by the turbine; and a turbine regulation switching device regulating an exhaust gas flow rate to be supplied to the turbine, and
controlling an opening degree of the turbine regulation switching device based on an operation state of the internal combustion engine and a first opening map,
the method comprising,
when determining whether or not the compressor enters a surging state during vehicle deceleration and determining that the compressor enters the surging state,
a surge avoidance process of:
acquiring a first target opening degree based on the operation state and the first opening map, and, if the first target opening degree is smaller than a predetermined surge avoiding first target opening degree, controlling the turbine regulation switching device to the surge avoiding first target opening degree, and
controlling the turbine regulation switching device to the first target opening degree, if the first target opening degree is not less than the surge avoiding first target opening degree.

In addition, it is preferable that the control method of the internal combustion engine mentioned above is provided with an EGR valve which controls the opening degree so as to regulate a flow rate of exhaust gas recirculating from an exhaust gas upstream side of the turbine based on the operation state of the internal combustion engine and the second opening map, in which the surge avoidance process includes, when the compressor is determined to enter the surging state, a process which acquires a second target opening degree based on the operation state and the second opening map, and which controls the EGR valve to the surge avoiding second target opening degree if the second target opening degree is greater than a predetermined surge avoiding second target opening degree, and controls the EGR valve to the second target opening degree if the second target opening degree is equal to or less than the surge avoiding second target opening degree.

Further, it is preferable that the control method of the internal combustion engine mentioned above includes a surge avoidance determination process which determines vehicle deceleration every predetermined determination time, and determines based on the boost pressure of the turbocharger and the engine speed whether or not the compressor enters the surging state, a surge avoidance timer maintains the surge avoidance process until a predetermined surge avoidance time elapses from a time point that the surge avoidance determination process determines that the compressor enters the surging state, and the surge avoidance timer maintains the surge avoidance process until the surge avoidance time elapses from a time point that the surge avoidance determination process lastly determines that the compressor enters the surging state, when the surge avoidance determination process determines that the compressor enters the surging state during the lapse of the surge avoidance time.

According to the method mentioned above, it is possible to prevent the surge generation and the generation of the flow-back sound of the turbocharger during the vehicle deceleration, without affecting the other performances such as the fuel consumption and the exhaust gas.

### EFFECT OF THE INVENTION

According to the present invention, it is possible to prevent the surge generation and the generation of the flow-back sound of the turbocharger during the vehicle deceleration, without affecting the other performances such as the fuel consumption and the exhaust gas. Further, it is possible to ensure the response of the turbocharger at the re-acceleration time. In addition, it is possible to reduce the man hour, and it is possible to provide the simpler control.

### BRIEF DESCRIPTION OF THE DRAWINGS

[Fig. 1] Fig. 1 is a configuration diagram showing an internal combustion engine of a first embodiment according to the present invention.
[Fig. 2] Fig. 2 is a view showing a control per time of the internal combustion engine shown in Fig. 1.
[Fig. 3] Fig. 3 is a flow chart showing a surge avoidance determination process of a control method of the internal combustion engine shown in Fig. 1.
[Fig. 4] Fig. 4 is a flow chart showing a surge avoidance process of the control method of the internal combustion engine shown in Fig. 1.
[Fig. 5] Fig. 5 is a configuration diagram showing an internal combustion engine of a second embodiment according to the present invention.
[Fig. 6] Fig. 6 is a view showing a control per time of the internal combustion engine shown in Fig. 5.
[Fig. 7] Fig. 7 is a flow chart showing a surge avoidance process of a control method of the internal combustion engine shown in Fig. 5, in which Fig. 7 (a) shows a surge avoidance unit configured to control an EGR valve, and Fig. 7 (b) shows a surge avoidance unit which controls a waste gate valve.
[Fig. 8] Fig. 8 is a graph showing a relationship between an accelerator opening degree and an intake air amount, in which Fig. 8 (a) shows a conventional internal combustion engine, and Fig. 8(b) shows an internal combustion engine of an embodiment according to the present invention.
[Fig. 9] Fig. 9 is a map showing an operation region of a compressor of a turbocharger of the conventional internal combustion engine.

### MODES FOR CARRYING OUT THE INVENTION

A description will be given of an internal combustion engine and a control method thereof of an embodiment according to the present invention with reference to the accompanying drawings. The embodiment is described by exemplifying a diesel engine, however, the present invention may be applied to a gasoline engine without being limited to the diesel engine, and a number of cylinders and an arrangement of the cylinders are not limited. With regard to the drawings, sizes are changed so as to easily understand the structures, and rates of thickness, width and length of each of the members and each of parts are not necessarily identical to rates of actually manufactured members and parts.

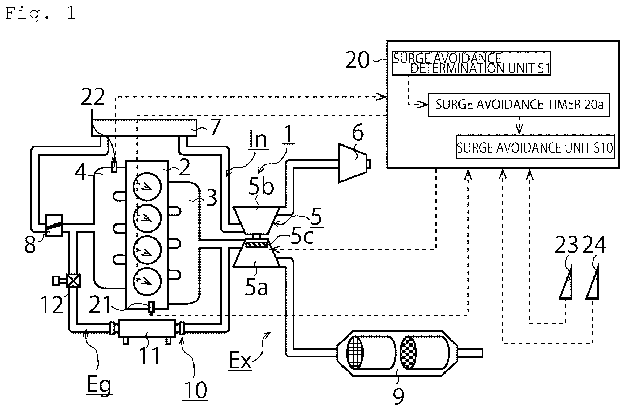

First of all, a description will be given of an internal combustion engine of a first embodiment according to the present invention with reference to Fig. 1. An engine (an internal combustion engine) 1 is provided with an engine main body 2, an exhaust gas passage Ex, an intake gas passage In, and an EGR (exhaust gas recirculation) passage Eg, and is further provided with an exhaust manifold 3, an inlet manifold 4, a turbocharger 5, an intake gas duct (including an air cleaner) 6, an intercooler 7, an intake throttle (hereinafter, refer to as IN/TH) 8, an post-processing device 9 (including a DOC (a diesel oxidation catalyst and a DPF (a collecting device)), and an EGR (exhaust gas recirculation) system 10.

Further, the turbocharger 5 is provided with a turbine 5a, a compressor 5b, and a nozzle vane 5c (a turbine regulation switching device) which can change a flow rate of exhaust gas passing through the turbine 5a, and the EGR system 10 is provided with an EGR cooler 11 and an EGR valve (an EGR valve) 12. The turbocharger 5 may be called as a variable nozzle turbocharger, a variable wing turbocharger or a VGS turbocharger.

In addition, the engine 1 is provided with an ECU (a control device) 20 which is called as an engine control unit, and is also provided with a crank angle sensor 21, a boost pressure sensor 22, an accelerator pedal 23 and a brake pedal 24 which are connected to the ECU 20.

The ECU 20 is a microcontroller which comprehensively carries out an electric control in charge of a control of the engine 1 by an electric circuit, is provided with a surge avoidance determination unit (process) S1 configured to determine that the compressor 5b enters the surging state, a surge avoidance unit (process) S10 configured to carry out a surge avoidance control avoiding the compressor 5b from entering the surging state, and a surge avoidance timer 20a which maintains the surge avoidance control of the surge avoidance unit (process) S10, and controls an opening degree of the nozzle vane 5c based on the signals detected from the crank angle sensor 21, the boost pressure sensor 22, the accelerator pedal 23 and the brake pedal 24.

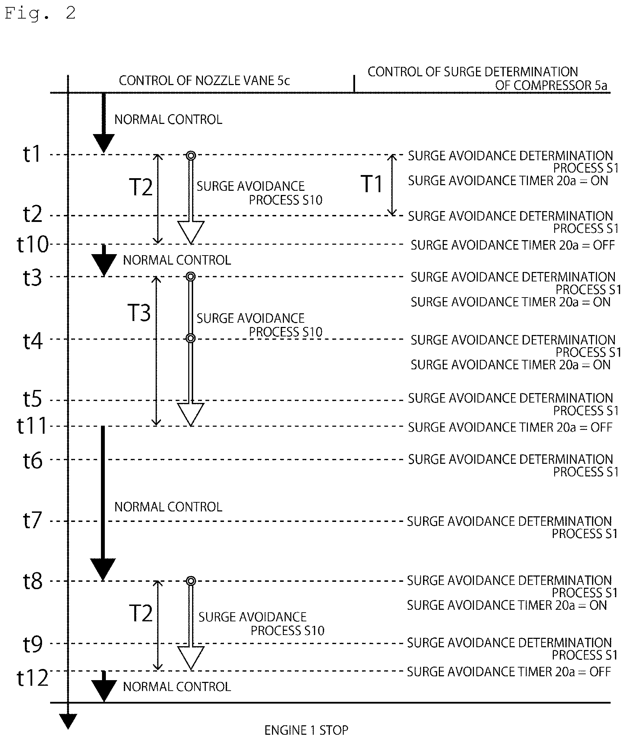

Next, a description will be given of a control method of the engine 1 with reference to Figs. 2 to 4. Fig. 2 shows a control which is executed by the ECU 20 from a certain time point of a normal control. Here, times for repeating a surge avoidance determination process S1 are set to t1 to t9, and times for completing the surge avoidance timer 20a are set to t10, t11 and t12. Further, a time between the times t1 and t2, that is, an interval (a surge avoidance time) for execution of the surge avoidance determination process S1 is set to T1, and an interval (a surge avoidance time) from a start to an end of the surge avoidance timer 20a is set to T2.

The control method of the engine 1 is a control method in which the surge avoidance determination process S1 and a surge avoidance process S10 make are performed in parallel, and the surging state is avoided before the compressor 5b enters the surging state, and is a control method in which the surge avoidance timer 20a maintains the surge avoidance process S10 until the surge avoidance time T2 elapses, if the compressor 5b is determined to enter the surging state.

As a method of avoiding the surging state before the compressor 5b enters the surging state, results of determination of the surge avoidance determination process S1 is used as a trigger for controlling the opening degree of the nozzle vane 5c. As a result, it is possible to avoid in advance the compressor 5b from entering the surging state by maintaining the opening degree of the nozzle vane 5c at an appropriate opening degree for an appropriate time.

Further, even when there are plural timings that the operation region of the compressor 5b enters into the surge region, for example, during a period until a vehicle stop from the deceleration, it is possible to avoid at all the timings by performing the respective processes in parallel. Therefore, it is possible to avoid the surging state of the compressor 5b in all the operation area of the engine 1.

Next, a description will be given in detail of each of the surge avoidance determination process S1 and the surge avoidance process S10. Before that, a description will be given of a control of the nozzle vane 5c at the normal operation time.

At the normal operation time, the ECU 20 controls the opening degree of the nozzle vane 5c based on an operation state of the vehicle and a first opening map M1 of the nozzle vane 5c (not shown). The operation state here represents a fuel injection amount Qn and an engine speed Ne in the embodiment. A first target opening degree TAn stored in the first opening map M1 is an opening degree which is set to a closing side, in correspondence to decrease of the engine speed Ne and the fuel injection amount Qn.

The embodiment employs the first target opening degree TAn changing to the side which is close to the closing side, in correspondence to the decrease of the engine speed Ne and the fuel injection amount Qn. However, the first opening map M1 may be optionally set in conformity to the characteristic of the engine 1, by experimentally determining the first target opening degree TAn in correspondence to the fuel injection amount Qn and the engine speed Ne.

Next, a description will be given of the surge avoidance determination process S1. The surge avoidance determination process S1 is a process of determining that the compressor 5b of the turbocharger 5 enters the surging state in future, and employs the engine speed Ne of the engine 1 and the boost pressure Pn of the turbocharger 5 as information for such determination. Further, when the process determines that the compressor 5b enters the surging state in future, the surge avoidance timer 20a is turned on.

The surge avoidance determination process S1 is a process which is carried out every predetermined determination time T1, in which an accelerator opening degree Acc to be detected by the accelerator pedal 23, a fuel injection amount Qn to be determined by the ECU 20 based on the information of the accelerator opening degree Acc, an engine speed Ne to be detected by the crank angle sensor 21, and a boost pressure Pn to be detected by the boost pressure sensor 22 are inputted for every determination time T1.

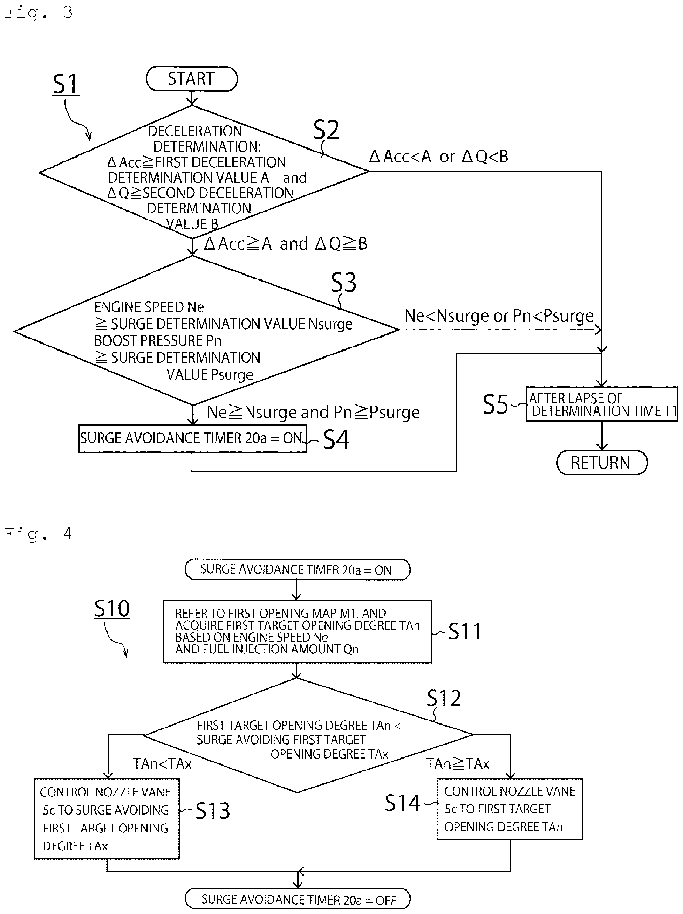

First of all, as shown by a flow chart in Fig. 3, the process carries out a step S2 which determines whether or not a change rate ΔAcc of the accelerator opening degree Acc for each determination time T1 is greater than a first deceleration determination value A, and determines whether or not a change rate ΔQ of the fuel injection amount Qn for each determination time T1 is greater than a second deceleration determination value B, for determining deceleration of the vehicle. The step determines as a deceleration when each of the change rates ΔAcc and ΔQ goes beyond the predetermined change rate, but, the step is not limited to the above as long as the vehicle deceleration determination is carried out.

When the deceleration is determined in this step S2, the next step S3 is carried out, and when the deceleration can not be determined, the step goes to a step S5. When the deceleration is determined, the process goes on to the step S3 which determines whether or not the engine speed Ne is not less than a surge determination value Nsurge, and whether or not the boost pressure Pn is not less than a surge determination value Psurge.

When a predetermined condition is satisfied in the step S3, the step goes on to a step S4, and when the predetermined condition is not satisfied, the step goes on to the step S5. When the step S3 determines that the surge avoidance is necessary (Ne ≥ Nsurge and Pn ≥ Psurge), the process carries out the step S4 which turns on (starts) the surge avoidance timer 20a.

When all the determination is completed, the determination is started again from the step S2 after a lapse of the determination time T1 (the step S5).

The surge avoidance determination process S1 determines that the surge avoidance process S10 is necessary when the engine speed Ne is not less than the predetermined surge determination value Nsurge, and the boost pressure Pn is not less than the predetermined surge determination value Psurge. However, each of the determination values is a value which is defined in correspondence to the characteristic of the engine 1, and can be optionally set.

Each of the determination values is preferably set to a value which can determine whether or not the operation region of the compressor 5b enters into the surge region beyond the surge line in future, and is more preferably set to a value which can determine whether or not the operation region of the compressor 5b goes beyond a pre-surge line in future. If it is possible to determine in advance the case that the operation region of the compressor 5b goes beyond the pre-surge line in future, generation of the surge sound can be avoided before an actual surge sound.

In addition, in the embodiment, the process determines based on the engine speed Ne and the boost pressure Pn, but, the process may determine, for example, by a method of determining based on only the boost pressure Pn, or a method of adding a step which determines whether or not the fuel injection amount Qn is not less than a threshold value, in addition to the engine speed Ne and the boost pressure Pn. Particularly, when the fuel injection amount Qn is added to the condition for determination, it is possible to grasp the future surging state of the compressor 5b at a high precision. Further, a pressure ratio Pin/Pout before and after the compressor 5b may be employed in place of the boost pressure Pn.

Next, a description will be given of the surge avoidance process S10. The surge avoidance process S10 is a process which is started when the surge avoidance determination process S1 mentioned above determines that the compressor 5b enters the surging state in future, and the surge avoidance timer 20a turns on. Here, an opening degree of the nozzle vane 5c based on the first opening map M1 is set to a first target opening degree TAn.

First of all, when the surge avoidance timer 20a turns on, the process carries out a step S11 which refers to the first opening map M1, and acquires the first target opening degree TAn based on the engine speed Ne and the fuel injection amount Qn, as shown by a flow chart in Fig. 4. Next, the process carries out a step S12 which determines whether or not the first target opening degree TAn is smaller than the surge avoiding first target opening degree TAx.

The surge avoiding first target opening degree TAx indicates a fixed opening degree which is not changed by the operation condition of the engine 1, and is an opening degree which can avoid the operation region of the compressor 5b from entering into the surge region, at a surge avoidance time T2 between a start and an end of the surge avoidance timer 20a.

The surge avoiding first target opening degree TAx is preferably set so as to decrease an EGR gas flow rate and increase a new intake air amount, and the surge avoiding first target opening degree TAx is preferably set to an opening degree which is closer to an opening side of the nozzle vane 5c and closer to a closing side than a full-open opening degree of the nozzle vane 5c. The surge avoiding first target opening degree TAx is, for example, an opening degree near 80 % when the full-open opening degree of the nozzle vane 5c is set to 100 %.

Particularly, it is advantageous for restoring the turbocharger 5 at the re-acceleration time to set the surge avoiding first target opening degree TAx to the opening degree which is closer to the closing side than the opening degree of the full-open. For example, it is impossible to ensure the response of the turbocharger 5 at the re-acceleration time, when the surge avoiding first target opening degree TAx is set to the full-open opening degree. However, the response of the turbocharger 5 can be ensured at the re-acceleration time by setting the opening degree closer to the closing side than the full-open opening degree.

The step S12 is a determination step for setting the opening degree of the nozzle vane 5c to be equal to or more than the surge avoiding first target opening degree TAx. For example, when the surge avoiding first target opening degree TAx is set to 80 %, and the first target opening degree TAn corresponding to the first opening map M1 acquired in the step S11 is 60 %, the opening degree of the nozzle vane 5c is controlled to 80 % of the surge avoiding first target opening degree TAx. On the other hand, if the first target opening degree TAn corresponding to the first opening map M1 is 90 %, the opening degree is controlled to 90 % of the first target opening degree TAn.

By using the step S12, it is possible to make the operation region of the compressor 5b far from the surge line before the compressor 5b enters the surging state. As a result, it is possible to avoid the compressor 5b from entering the surging state by the control having the reduced man hour, without requiring a separate opening map for avoiding the surging state.

Further, if the first target opening degree TAn is not less than the surge avoiding first target opening degree TAx as well as the surge avoiding first target opening degree TAx or more is established, excessive increase of the boost pressure is suppressed by controlling to the opening degree of the first target opening degree TAn. Therefore, it is possible to avoid the surging state of the compressor 5b without affecting the other performances such as the fuel consumption and the exhaust gas.

When the opening degree is set in a step S12, the opening degree of the nozzle vane 5c is controlled as shown in steps S13 and S14. Further, the control method is completed at the end of the surge avoidance timer 20a. The surge avoidance process S10 is a process in which the steps S11 to S14 mentioned above are completed just after the surge avoidance timer 20a is started and which maintains the opening degree decided in the steps S13 and S14 during the surge avoidance time T2 up to the end of the surge avoidance timer 20a.

The surge avoidance time T2 is an interval from the start to the end of the surge avoidance timer 20a, and is an optional time previously stored in the ECU 20. The surge avoidance time T2 is an experimentally determined numerical value so as to prevent the operation region of the compressor 5b from entering into the surge region, and can be optionally defined according to the specification of the engine 1. However, since it is possible to carry out the control of the nozzle vane 5c for avoiding the surging state of the compressor 5b in a short time, by setting the surge avoidance time to about 0 to 5 seconds, the surging state can be avoided without affecting the other performances such as the fuel consumption and the exhaust gas.

Next, a description will be given of the control method of the internal combustion engine of the embodiment according to the present invention including the surge avoidance determination process S1 and the surge avoidance process S10 with reference to Fig. 2.

First of all, when the surge avoidance determination process S1 is carried out at a time t1, and the surge avoidance timer 20a is turned on (started), the surge avoidance process S10 is started from a time t2. Further, the surge avoidance timer 20a is turned off (completed) at a time t10, and the surge avoidance process S10 is completed. When the surge avoidance timer 20a is turned off at the time t10, the nozzle vane 5c is normally controlled, that is, is controlled to the opening degree based on the first opening map M1.

Next, when the surge avoidance timer 20a is turned on by the surge avoidance determination process S1 at a time t3, the surge avoidance process S10 is started in the same manner, however, the surge avoidance timer 20a is turned on by the surge avoidance determination process S1 which is carried out at a time t4 during the lapse of the surge avoidance time T2.

Then, the first surge avoidance process S10 is started again from the time t4 that the compressor 5b is determined to come lastly to the surging state. Further, the surge avoidance timer 20a is completed at a time t11, thereby completing the surge avoidance process S10. The surge avoidance time T3 at this time is sum of the determination time T1 and the surge avoidance time T2.

More specifically, when the surge avoidance determination process S1 determines that it is necessary to carry out the surge avoidance process S10 under execution of the surge avoidance process S10, the surge avoidance timer 20a is turned on, and the surge avoidance process S10 starts again. As a result, it is possible to always carry out the surge avoidance process S10 based on the latest surge determination.

Therefore, it is preferable to carry out the surge avoidance determination process S1 at least once between the start and the end of the surge avoidance timer 20a, that is, during the surge avoidance time T2, and the determination time T1 is preferably shorter than the surge avoidance time T2.

In the surge avoidance determination process S1 between the times t5 and t7, the surge avoidance timer 20a is not turned on, but the nozzle vane 5c is normally controlled.

Next, when the surge avoidance timer 20a is turned on in the surge avoidance determination process S1 at a time t8, the surge avoidance process S10 is started from the time t8. Further, the surge avoidance timer 20a is turned off (completed) at the time t12. Further, the engine 1 stops.

When the surge avoidance timer 20a is not started in the surge avoidance determination process S1, the nozzle vane 5c can be set to an opening degree in correspondence to the first opening map M1 in the same manner as the normal running time. Therefore, it is possible to suppress the change of the engine operation state caused by the control of avoiding the surging state of the compressor 5b, so that the driver is unlikely to feel uncomfortable and thus the control with an excellent drivability can be offered.

According to the control method mentioned above, the surging state can be avoided by determining whether or not the compressor 5b enters the surging state in future, and controlling the opening degree of the nozzle vane 5c before the compressor 5b enters the surging state, during the vehicle deceleration. As a result, it is possible to prevent the surge generation and the generation of the blow-back sound in the turbocharger 5 during the vehicle deceleration.

Further, since the opening degree of the nozzle vane 5c is set equal to or more than the opening degree at which the compressor 5b does not enter the surging state, and is not set to be full open, it is possible to secure the responsiveness of the turbocharger at the re-acceleration time. In addition, since the map used for controlling the nozzle vane 5c is only by the first opening map M1, it is possible to reduce the man hour and to provide the simpler control.

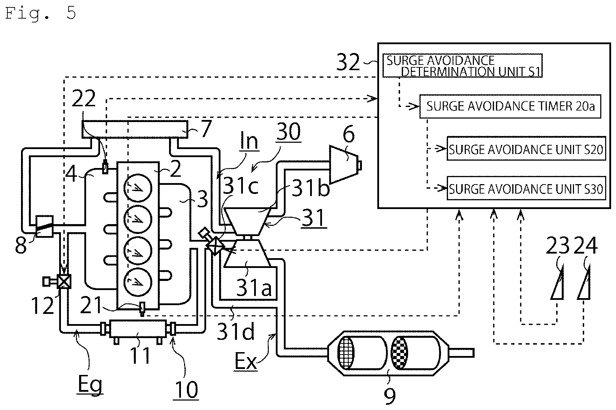

Next, a description will be given of an internal combustion engine of a second embodiment according to the present invention with reference to Fig. 5. An engine 30 is provided with a waste gate type turbocharger (hereinafter, refer to as a turbocharger) 31 having a valve mechanism, a so-called waste gate valve (a turbine regulation switching device, hereinafter refer to as WGV) 31c which regulates an inflow amount to a turbine 31a by flow dividing a part of the exhaust gas to a flow dividing path 31d, as shown in Fig. 5, in place of the turbocharger 5 of the engine 1 according to the first embodiment shown in Fig. 1. Further, an ECU 32 is provided with surge avoidance units (processes) S20 and S30 which are carried out during the lapse of the surge avoidance timer 20a.

At the normal operation time, the ECU 32 controls an opening degree of an EGR valve 12 based on an operation state of the vehicle, and a second opening map M2 (not shown) of the EGR valve 12, and also controls an opening degree of a WGV 31c based on the operation state of the vehicle and a third opening map M3 (not shown) of the WGV 31c.

A second target opening degree TBn stored in the second opening map M2 is set to a side which is closer to the opening side in correspondence to decrease of the engine speed Ne and the fuel injection amount Qn, and a third target opening degree TCn stored in the third opening map M3 is set to a side which is closer to the closing side in correspondence to the decrease of the engine speed Ne and the fuel injection amount Qn.

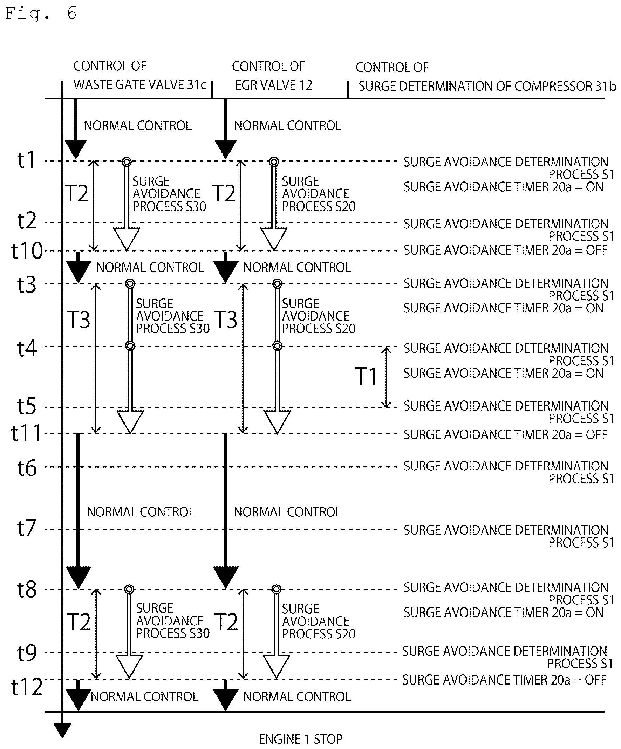

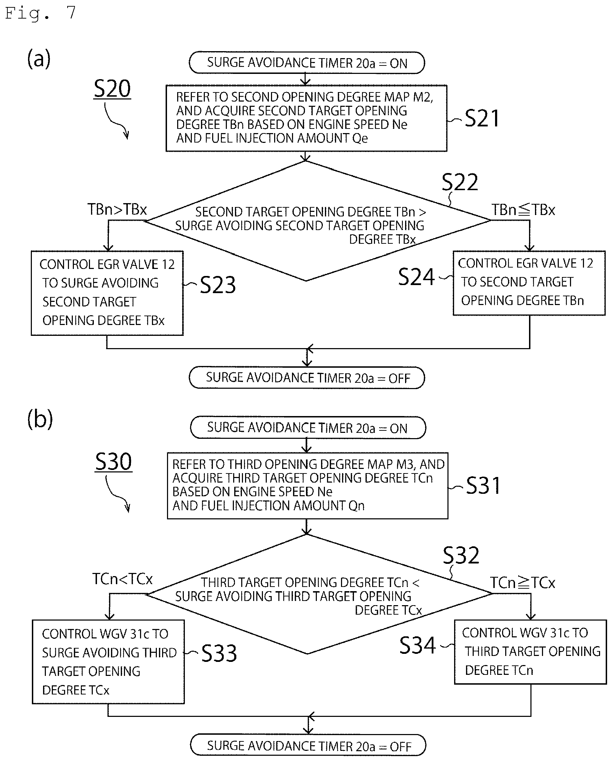

Next, a description will be given of a control method of the engine 30 with reference to Figs. 6 and 7. In Fig. 6, a description of the same elements as those of Fig. 2 will be omitted by using the same reference numerals. The control method of the engine 30 is a control method which avoids a surging state of a compressor 31b by performing the surge avoidance determination process S1 and the surge avoidance processes S20 and S30 in parallel, and simultaneously controlling the WGV 31c and the EGR valve 12 before the compressor 31b enters the surging state.

Since the surge avoidance determination process S1 and the surge avoidance timer 20a are the same as those of the first embodiment, a description thereof will be omitted, and a description will be given of the surge avoidance processes S20 and S30 after the surge avoidance timer 20a is turned on.

The surge avoidance processes S20 and S30 are processes which are simultaneously started when the surge avoidance timer 20a is turned on, and are carried out in parallel. First of all, a description will be given of the surge avoidance process S20. When the surge avoidance timer 20a is turned on, the process carries out a step S21 which refers to a second opening map M2 and acquires a second target opening degree TBn based on the engine speed Ne and the fuel injection amount Qn, as shown by a flow chart in Fig. 7(a). Next, the process carries out a step S22 which determines whether or not a second target opening degree TBn is greater than a surge avoiding second target opening degree TBx.

The surge avoiding second target opening degree TBx is preferably set so as to decrease the EGR gas flow rate and increase the new intake air amount, and is preferably set the surge avoiding second target opening degree TBx to an opening degree which is closer to a closing side of the EGR valve 12. The surge avoiding second target opening degree TBx is an opening degree, for example, about 20 % while the full-open opening degree of the EGR valve 12 is set to 0 %.

The step S22 is a determination step for setting the opening degree of the EGR valve 12 to be equal to or less than the surge avoiding second target opening degree TBx. For example, when the surge avoiding second target opening degree TBx is set to 20 %, and the second target opening degree TBn corresponding to the second opening map M2 acquired in the step S21 is 30 %, the opening degree of the EGR valve 12 is controlled to 20 % of the surge avoiding second target opening degree TBx. On the other hand, if the second target opening degree TBn corresponding to the second opening map M2 is 10 %, the opening degree of the EGR valve 12 is controlled to 10 % of the second target opening degree TBn.

When the opening degree is set in the step S22, the opening degree of the EGR valve 12 is controlled as shown by steps S23 and S24. Further, the control method is completed at the end of the surge avoidance timer 20a.

The surge avoidance process S20 is a process in which the steps S21 to S24 are completed just after the surge avoidance timer 20a is started and which maintains the opening degree decided in the steps S23 and S24 during the surge avoidance time T2 up to the end of the surge avoidance timer 20a.

Next, a description will be given of the surge avoidance process S30. As shown by a flow chart in Fig. 7(b), when the surge avoidance timer 20a is turned on, the process first of all carries out a step S31 which refers to a third opening map M3 and acquires a third target opening degree TCn based on the engine speed Ne and the fuel injection amount Qn. Next, the process carries out a step S32 which determines whether or not the third target opening degree TCn is smaller than a surge avoiding third target opening degree TCx.

The surge avoiding third target opening degree TCx is preferably set so as to decrease the EGR gas flow rate and increase the new intake air amount, and it is preferable to set to the surge avoiding third target opening degree TCx to an opening degree which is closer to an opening side of the WGV 31c and closer to a closing side than the full-open opening degree of the WGV 31c. The surge avoiding third target opening degree TCx is an opening degree, for example, about 80 % while the full-open opening degree of the WGV 31c is set to 100 %.

When the opening degree is set in the step S32, the opening degree of the WGV 31c is controlled as shown in steps S33 and S34. Further, the control method is completed at the end of the surge avoidance timer 20a.

The surge avoidance process S30 is a process in which the steps S31 to S34 are completed just after the surge avoidance timer 20a is started and which maintains the opening degree decided in the steps S33 and S34 during the surge avoidance time T2 up to the end of the surge avoidance timer 20a.

According to the control method mentioned above, the surge avoidance processes S20 and S30 are carried out in parallel when the surge avoidance timer 20a is turned on, and it is possible to prevent the compressor 31b from entering the surging state based on the EGR gas flow rate decrease by controlling the opening degree of the EGR valve 12, and the new intake air amount increase by controlling the opening degree of the WGV 31c. As a result, it is possible to reduce the flow-back sound from the intake gas duct 6 and to prevent the turbocharger 5 from being damaged.

Further, due to no change of the second opening map M2 and the third opening map M3 at the normal operation time, or no employment of a separate opening map for avoiding the surging state, it is possible to avoid in advance the compressor 31b from entering the surging state during the vehicle deceleration based on an easy control having the reduced man hour, without affecting the other performances such as the fuel consumption and the exhaust gas. In addition, since the process does not control to an opening degree which is more than necessary particularly when the engine speed Ne and the fuel injection amount Qn are large, it is possible to suppress excessive increase of the boost pressure and deterioration of the responsiveness of the turbocharger 31 at the re-acceleration time.

The embodiment is provided with the so-called high-pressure type EGR system 10 which recirculates the EGR gas from the exhaust gas upstream side of the turbocharger 31 to the engine main body 2, however, the present invention can be applied, for example, to a so-called low-pressure type EGR system which recirculates the EGR gas from the exhaust gas downstream side of the turbocharger 31 to the engine main body 2.

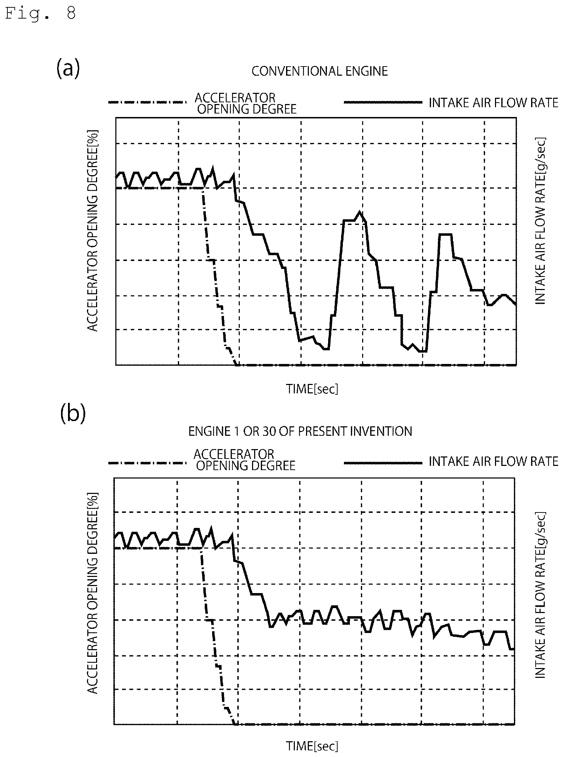

Here, a description will be given of a state at the vehicle stopping time of the conventional engine and the engine 1 or 30 of the present invention, with reference to Fig. 8. As shown in Fig. 8(a), in the conventional engine, when the accelerator opening degree enters 0% and the deceleration is started, the intake air flow rate is rapidly lowered accordingly. At this time, as well as the flow-back sound is generated from the intake gas duct and the noise is increased, the compressor enters the surging state. The intake air flow rate is rapidly lowered, thereafter rapidly raised and lowered repeatedly and enters a stop state.

On the other hand, as shown in Fig. 8(b), in the engine 1 or 30 of the present invention, even when the accelerator opening degree enters 0 %, and the deceleration is started, the intake air flow rate is not rapidly lowered. This is because the surge avoidance determination process S1 is carried out when the accelerator opening degree enters 0 %, and the surge avoidance process S10 or the surge avoidance processes S20 and S30 are carried out so as to lower the EGR gas flow rate and increase the new intake air flow rate.

As shown in Fig. 8, the present invention can reduce the pressure ratio Pin/Pout before and after the compressor 5b or 31b in such a manner as to prevent the operation region of the compressor 5b or 31b of the turbocharger 5 or 31 from entering into a surging region. As a result, since it is possible to avoid in advance the operation in the surging region of the compressor 5b or 31b, it is possible to reduce the flow-back sound from the intake gas duct 6 and to prevent the turbocharger 5 or 31 from being damaged.

The description is given of the second embodiment by exemplifying the control method obtained by combining the surge avoidance process S20 and the surge avoidance process S30. However, the turbocharger 5 in the first embodiment may be used in place of the turbocharger 31, and the surge avoidance process S10 may be used in place of the surge avoidance process S30, for example.

Further, the surging state of the compressor 5b can be avoided by using only the surge avoidance process S20, that is, the method of controlling the opening degree of the EGR valve 12.

### INDUSTRIAL APPLICABILITY

Since the internal combustion engine according to the present invention can prevent the surge generation and the flow-back sound generation of the turbocharger during the vehicle deceleration without affecting the other performances such as the fuel consumption and the exhaust gas, the internal combustion engine can be utilized in a vehicle such as a truck which mounts the diesel engine particularly provided with the turbocharger in the exhaust gas passage.

### EXPLANATION OF REFERENCE NUMERALS

1 ENGINE
2 ENGINE MAIN BODY
3 EXHAUST MANIFOLD
4 INLET MANIFOLD
5 TURBOCHARGER
5a TURBINE
5b COMPRESSOR
5c NOZZLE VANE (TURBINE REGULATION SWITCHING DEVICE)
6 AIR CLEANER
7 INTERCOOLER
8 INTAKE THROTTLE (IN/TH)
9 POST-PROCESSING DEVICE
10 EGR SYSTEM
11 EGR COOLER
12 EGR VALVE (EGR VALVE)
20 ECU (CONTROL DEVICE)
20a SURGE AVOIDANCE TIMER
30 ENGINE
31 TURBOCHARGER
31a TURBINE
31b COMPRESSOR
31c WGV (WASTE GATE VALVE; TURBINE REGULATION SWITCHING DEVICE)
31d FLOW DIVIDING PATH
32 ECU (CONTROL DEVICE)
M1 FIRST OPENING MAP
M2 SECOND OPENING MAP
M3 THIRD OPENING MAP
S1 SURGE AVOIDANCE DETERMINATION UNIT (PROCESS)
S10, S20, S30 SURGE AVOIDANCE UNIT (PROCESS)
Ex EXHAUST GAS PASSAGE
In INTAKE GAS PASSAGE
Eg EGR PASSAGE

## Claims

1. An internal combustion engine (1, 30) comprising:
a turbocharger (5, 31) having a turbine (5a, 31a) arranged in an exhaust gas passage (Ex) and a compressor (5b, 31b) arranged in an intake gas passage (In) and driven by the turbine (5a, 31a);
a turbine regulation switching device (5c, 31c) regulating an exhaust gas flow rate to be supplied to the turbine (5a, 31a); and
a control device (20, 32) controlling an opening degree of the turbine regulation switching device (5c, 31c) based on an operation state of the internal combustion engine (1, 30) and a first opening map (M1), the control device (20, 32) having a surge avoidance unit, a surge avoidance determination unit and a surge avoidance timer (20a), **characterized in that** the surge avoidance unit, the surge avoidance determination unit and the surge avoidance timer (20a) are configured to:
periodically determine at a predetermined period equal to a determination time whether or not the compressor (5b, 31b) is in a surging state by the surge avoidance determination unit based on a boost pressure of the compressor (5b, 31b) and an engine speed when the vehicle decelerates; wherein the surge avoidance timer (20a) turns on every time that the surge avoidance determination unit determines that the compressor (5b, 31b) is in a surging state, wherein "on" status of the surge avoidance timer is renewed and a control to avoid surge is continuously carried out until a determination is made that a state in which surging is not generated has been reached and the surge avoidance timer (20a) turns off when a predetermined surge avoidance time elapses after it turns on;
during the time between after the surge avoidance timer turns on until it turns off, based on a first target opening degree relative to the operation state and the first opening map (M1), if the first target opening degree is smaller than a predetermined surge avoiding first target opening degree, control the turbine regulation switching device (5c, 31c) to the surge avoiding first target opening degree by the surge avoidance unit, and
in contrast, control the turbine regulation switching device (5c, 31c) to the first target opening degree by the surge avoidance unit, if the first target opening degree is not less than the surge avoiding first target opening degree.

2. The internal combustion engine (1, 30) according to claim 1, **characterized in that** the determination time is shorter than the surge avoidance time.

3. The internal combustion engine (1, 30) according to claim 1 or 2, **characterized in that** the surge avoiding first target opening degree is set to an opening degree which is closer to a closing side than an opening degree at which the opening degree of the turbine regulation switching device (5c, 31c) is fully open.

4. The internal combustion engine (1, 30) according to any of claims 1 to 3, **characterized in that**:
the control device (20, 32) is configured to control an opening degree of an EGR valve (12) regulating an exhaust gas flow rate recirculating from an exhaust gas upstream side of the turbine (5a, 31a) based on an operation state of the internal combustion engine (1, 30) and a second opening map (M2); and
during the time after the surge avoidance timer turns on until it turns off, based on a second target opening degree relative to the operation state and the second opening map (M2), if the second target opening degree is greater than a predetermined surge avoiding second target opening degree, control the EGR valve (12) to the surge avoiding second target opening degree by the surge avoidance unit; and
in contrast, control the turbine regulation switching device (5c, 31c) to the second target opening degree by the surge avoidance unit, if the second target opening degree is not more than the surge avoiding second target opening degree.

5. A control method of an internal combustion engine (1, 30),
including a turbocharger (5, 31) having a turbine (5a, 31a) arranged in an exhaust gas passage (Ex) and a compressor (5b, 31b) arranged in an intake gas passage (In) and driven by the turbine (5a, 31a); and a turbine regulation switching device (5c, 31c) regulating an exhaust gas flow rate to be supplied to the turbine (5a, 31a), and
controlling an opening degree of the turbine regulation switching device (5c, 31c) based on an operation state of the internal combustion engine (1, 30) and a first opening map (M1),
the method **characterized in** comprising,
determining periodically at a predetermined period equal to a determination time whether or not the compressor (5b, 31b) is in a surging state based on a boost pressure of the compressor (5b, 31b) and an engine speed when a vehicle decelerates and determining that the compressor (5b, 31b) is in the surging state,
a surge avoidance process of:
turning the surge avoidance timer (20a) on, and turning the surge avoidance timer (20a) off when a predetermined surge avoidance time elapses;
renewing the "on" status of the surge avoidance timer and continuously carrying out a control to avoid surge until a determination is made that a state in which surging is not generated has been reached
during the time after the surge avoidance timer (20a) turns on until it turns off, based on a first target opening degree relative to the operation state and the first opening map (M1), if the first target opening degree is smaller than a predetermined surge avoiding first target opening degree, controlling the turbine regulation switching device (5c, 31c) to the surge avoiding first target opening degree, and
controlling the turbine regulation switching device (5c, 31c) to the first target opening degree, if the first target opening degree is not less than the surge avoiding first target opening degree.

## Patentansprüche

1. Verbrennungsmotor (1, 30), welcher aufweist:
einen Turbolader (5, 31) mit einer Turbine (5a, 31a), die in einem Abgaskanal (Ex) angeordnet ist, und einem Kompressor (5b, 31b), der in einem Einlasskanal (In) angeordnet ist, und durch die Turbine (5a, 31a) angetrieben wird,
eine Turbinenregulationsschaltvorrichtung (5c, 31c), welche eine der Turbine (5a, 31a) zugeführte Abgasflussrate reguliert, und
eine Steuervorrichtung (20, 32), welche einen Öffnungsgrad der Turbinenregulationsschaltvorrichtung (5c, 31c), basierend auf einem Betriebszustand des Verbrennungsmotors (1, 30) und einer ersten Öffnungskarte (M1) steuert, wobei die Steuervorrichtung (20, 32) eine Antiruckeleinrichtung, eine Antiruckelermittlungseinrichtung und einen Antiruckeltimer (20a) aufweist, **dadurch gekennzeichnet, dass** die Antiruckeleinrichtung, die Antiruckelermittlungseinrichtung und der Antiruckeltimer (20a) eingerichtet sind, um:
mit Hilfe der Antiruckelermittlungseinrichtung periodisch zu einer vorbestimmten Periode, welche gleich einer Ermittlungszeit ist, basierend auf einem Ladedruck des Kompressors (5b, 31b) und einer Motorgeschwindigkeit, zu ermitteln, ob der Kompressor (5b, 31b) in einem Ruckelzustand ist oder nicht, wenn das Fahrzeug abbremst,
wobei
der Antiruckeltimer (20a) jedes Mal anspringt, wenn die Antiruckelermittlungseinrichtung ermittelt, dass der Kompressor (5b, 31b) in einem Ruckelzustand ist, wobei der "An-"Status des Antiruckeltimers erneuert wird und eine Steuerung zur Vermeidung von Ruckeln kontinuierlich ausgeführt wird, bis festgestellt wird, dass ein Zustand erreicht wurde, in dem Ruckeln nicht erzeugt wird, und der Antiruckeltimer (20a) ausgeht, wenn eine vorbestimmte Antiruckelzeit verstreicht nachdem er anspringt,
während der Zeit zwischen dem Anspringen des Antiruckeltimers und dessen Ausgehen, basierend auf einem ersten Zielöffnungsgrad relativ zu dem Betriebszustand und der ersten Öffnungskarte (M1), wenn der erste Zielöffnungsgrad kleiner ist als ein vorbestimmter erster Antiruckelzielöffnungsgrad, die Turbinenregulationsschaltvorrichtung (5c, 31c) zu dem ersten Antiruckelzielöffnungsgrad durch die Überspannungsverhinderungseinheit gesteuert wird, und
im Gegensatz dazu, die Turbinenregulationsschaltvorrichtung (5c, 31c) zu dem ersten Zielöffnungsgrad durch die Antiruckeleinrichtung gesteuert wird, wenn der erste Zielöffnungsgrad nicht geringer ist als der erste Antiruckelzielöffnungsgrad.

2. Verbrennungsmotor (1, 30) nach Anspruch 1, **dadurch gekennzeichnet, dass** die Ermittlungszeit kürzer ist als die Antiruckelzeit.

3. Verbrennungsmotor (1, 30) nach Anspruch 1 oder 2, **dadurch gekennzeichnet, dass** der erste Antiruckelzielöffnungsgrad auf einen Öffnungsgrad festgesetzt wird, welcher näher an einer Verschlussseite liegt als ein Öffnungsgrad, an welchem der Öffnungsgrad der Turbinenregulationsschaltvorrichtung (5c, 31c) vollständig offen ist.

4. Verbrennungsmotor (1, 30) nach einem der Ansprüche 1 bis 3, **dadurch gekennzeichnet, dass**:
die Steuervorrichtung (20, 32) dafür eingerichtet ist, einen Öffnungsgrad eines EGR-Ventils (12) zu steuern, welches eine Abgasflussrate reguliert, welche von einer aufstromigen Abgasseite der Turbine (5a, 31a) zurückfließt, basierend auf einem Betriebszustand des Verbrennungsmotors (1, 30) und einer zweiten Öffnungskarte (M2), und
während der Zeit zwischen dem Anspringen des Antiruckeltimers und dessen Ausgehen, basierend auf einem zweiten Zielöffnungsgrad relativ zu dem Betriebszustand und der zweiten Öffnungskarte (M2), wenn der zweite Zielöffnungsgrad größer ist als ein vorbestimmter zweiter Antiruckelzielöffnungsgrad, das EGR-Ventil (12) zu dem zweiten Antiruckelzielöffnungsgrad durch die Antiruckeleinrichtung gesteuert wird, und
im Gegensatz dazu die Turbinenregulationsschaltvorrichtung (5c, 31c) zu dem zweiten Zielöffnungsgrad durch die Antiruckeleinrichtung gesteuert wird, wenn der zweite Zielöffnungsgrad nicht geringer ist als der zweite Antiruckelzielöffnungsgrad.

5. Verfahren zum Steuern eines Verbrennungsmotors (1, 30),
einschließlich eines Turboladers (5, 31) mit einer Turbine (5a, 31a), die in einem Abgaskanal (Ex) angeordnet ist, und mit einem Kompressor (5b, 31b), der in einem Einlasskanal (In) angeordnet ist, und durch die Turbine (5a, 31a) angetrieben wird, und einschließlich einer Turbinenregulationsschaltvorrichtung (5c, 31c), welche eine der Turbine (5a, 31a) zugeführte Abgasflussrate reguliert, und
Steuern eines Öffnungsgrads der Turbinenregulationsschaltvorrichtung (5c, 31c) basierend auf einem Betriebszustand des Verbrennungsmotors (1, 30) und einer ersten Öffnungskarte (M1),
wobei das Verfahren **dadurch gekennzeichnet ist, dass** es aufweist,
periodisches Bestimmen zu einer vorbestimmten Periode, welche gleich einer Ermittlungszeit ist, ob der Kompressor (5b, 31b) in einem Ruckelzustand ist oder nicht, basierend auf einem Ladedruck des Kompressors (5b, 31b) und einer Motorgeschwindigkeit, wenn ein Fahrzeug abbremst, und Bestimmen, dass der Kompressor (5b, 31b) in dem Ruckelzustand ist,
einen Antiruckelprozess, indem:
der Antiruckeltimer (20a) angeschaltet wird und der Antiruckeltimer (20a) abgeschaltet wird, wenn eine vorbestimmte Antiruckelzeit verstreicht,
Erneuern des "An-"Status des Antiruckeltimers und kontinuierliches Ausführen einer Steuerung zur Ruckelverhinderung bis festgestellt wird, dass ein Zustand erreicht wurde, in dem Ruckeln vermieden wird,
während der Zeit nach dem Anspringen des Antiruckeltimers (20a) und dessen Ausgehen, basierend auf einem ersten Zielöffnungsgrad relativ zu dem Betriebszustand und der ersten Öffnungskarte (M1), wenn der erste Zielöffnungsgrad kleiner ist als ein vorbestimmter erster Antiruckelzielöffnungsgrad, die Turbinenregulationsschaltvorrichtung (5c, 31c) zu dem ersten Antiruckelzielöffnungsgrad gesteuert wird, und
Steuern der Turbinenregulationsschaltvorrichtung (5c, 31c) zu dem ersten Zielöffnungsgrad, wenn der erste Zielöffnungsgrad nicht geringer ist als der erste Antiruckelzielöffnungsgrad.

## Revendications

1. Un moteur à combustion interne (1, 30) comprenant :
un turbocompresseur (5, 31) ayant une turbine (5a, 31a) agencée dans un passage de gaz d'échappement (Ex) et un compresseur (5b, 31b) agencé dans un passage de gaz d'admission (In) et entraîné par la turbine (5a, 31a) ;
un dispositif de commutation de régulation de turbine (5c, 31c) régulant un débit de gaz d'échappement devant être fourni à la turbine (5a, 31a) ; et
un dispositif de commande (20, 32) commandant un degré d'ouverture du dispositif de commutation de régulation de turbine (5c, 31c) sur la base d'un état de fonctionnement du moteur à combustion interne (1, 30) et d'une première carte d'ouverture (M1), le dispositif de commande (20, 32) ayant une unité d'évitement de surpression, une unité de détermination d'évitement de surpression et un temporisateur d'évitement de surpression (20a), **caractérisé en ce que** l'unité d'évitement de surpression, l'unité de détermination d'évitement de surpression et le temporisateur d'évitement de surpression (20a) sont configurés pour :
déterminer périodiquement, à une période prédéterminée égale à un temps de détermination, si oui ou non le compresseur (5b, 31b) est dans un état de surpression grâce à l'unité de détermination d'évitement de surpression sur la base d'une pression de suralimentation du compresseur (5b, 31b) et d'une vitesse de moteur lorsque le véhicule décélère ;
dans lequel le temporisateur d'évitement de surpression (20a) se met en marche à chaque fois que l'unité de détermination d'évitement de surpression détermine que le compresseur (5b, 31b) est dans un état de surpression, dans lequel le statut « marche » du temporisateur d'évitement de surpression est renouvelé et une commande pour éviter une surpression est réalisée de façon continue jusqu'à ce qu'une détermination soit effectuée qu'un état dans lequel la surpression n'est pas générée a été atteint et le temporisateur d'évitement de surpression (20a) s'arrête lorsqu'un temps d'évitement de surpression prédéterminé est écoulé après qu'il se soit mis en marche ;
pendant le temps entre après que le temporisateur d'évitement de surpression s'est mis en marche et jusqu'à ce qu'il s'arrête, sur la base d'un premier degré d'ouverture cible par rapport à l'état de fonctionnement et de la première carte d'ouverture (M1), si le premier degré d'ouverture cible est plus petit qu'un premier degré d'ouverture cible d'évitement de surpression prédéterminé, commander le dispositif de commutation de régulation de turbine (5c, 31c) vers le premier degré d'ouverture cible d'évitement de surpression grâce à l'unité d'évitement de surpression, et
au contraire, commander le dispositif de commutation de régulation de turbine (5c, 31c) vers le premier degré d'ouverture cible grâce à l'unité d'évitement de surpression, si le premier degré d'ouverture cible n'est pas inférieur au premier degré d'ouverture cible d'évitement de surpression.

2. Le moteur à combustion interne (1, 30) selon la revendication 1, **caractérisé en ce que** le temps de détermination est plus court que le temps d'évitement de surpression.

3. Le moteur à combustion interne (1, 30) selon la revendication 1 ou la revendication 2, **caractérisé en ce que** le premier degré d'ouverture cible d'évitement de surpression est réglé sur un degré d'ouverture qui est plus proche d'un côté de fermeture que d'un degré d'ouverture auquel le degré d'ouverture du dispositif de commutation de régulation de turbine (5c, 31c) est complètement ouvert.

4. Le moteur à combustion interne (1, 30) selon n'importe lesquelles des revendications 1 à 3, **caractérisé en ce que** :
le dispositif de commande (20, 32) est configuré pour commander un degré d'ouverture d'une soupape EGR (12) régulant un débit de gaz d'échappement recirculant depuis un côté amont de gaz d'échappement de la turbine (5a, 31a) sur la base d'un état de fonctionnement du moteur à combustion interne (1, 30) et d'une deuxième carte d'ouverture (M2) ; et
pendant le temps après que le temporisateur d'évitement de surpression s'est mis en marche et jusqu'à ce qu'il s'arrête, sur la base d'un deuxième degré d'ouverture cible par rapport à l'état de fonctionnement et de la deuxième carte d'ouverture (M2), si le deuxième degré d'ouverture cible est plus grand qu'un deuxième degré d'ouverture cible d'évitement de surpression prédéterminé, commander la soupape EGR (12) vers le deuxième degré d'ouverture cible d'évitement de surpression grâce à l'unité d'évitement de surpression ; et
au contraire, commander le dispositif de commutation de régulation de turbine (5c, 31c) vers le deuxième degré d'ouverture cible grâce à l'unité d'évitement de surpression, si le deuxième degré d'ouverture cible n'est pas supérieur au deuxième degré d'ouverture cible d'évitement de surpression.

5. Une méthode de commande d'un moteur à combustion interne (1, 30),
incluant un turbocompresseur (5, 31) ayant une turbine (5a, 31a) agencée dans un passage de gaz d'échappement (Ex) et un compresseur (5b, 31b) agencé dans un passage de gaz d'admission (In) et entraîné par la turbine (5a, 31a) ; et un dispositif de commutation de régulation de turbine (5c, 31c) régulant un débit de gaz d'échappement devant être fourni à la turbine (5a, 31a), et
commandant un degré d'ouverture du dispositif de commutation de régulation de turbine (5c, 31c) sur la base d'un état de fonctionnement du moteur à combustion interne (1, 30) et d'une première carte d'ouverture (M1),
la méthode étant **caractérisée par** le fait de comprendre,
la détermination périodique, à une période prédéterminée égale à un temps de détermination, de savoir si oui ou non le compresseur (5b, 31b) est dans un état de surpression sur la base d'une pression de suralimentation du compresseur (5b, 31b) et d'une vitesse de moteur lorsqu'un véhicule décélère et la détermination que le compresseur (5b, 31b) est dans l'état de surpression,
un procédé d'évitement de surpression consistant à :
mettre en marche le temporisateur d'évitement de surpression (20a), et arrêter le temporisateur d'évitement de surpression (20a) lorsqu'un temps d'évitement de surpression prédéterminé est écoulé ;
renouveler le statut « marche » du temporisateur d'évitement de surpression et réaliser de façon continue une commande pour éviter une surpression jusqu'à ce qu'une détermination soit effectuée qu'un état dans lequel la surpression n'est pas générée a été atteint
pendant le temps après que le temporisateur d'évitement de surpression (20a) s'est mis en marche et jusqu'à ce qu'il s'arrête, sur la base d'un premier degré d'ouverture cible par rapport à l'état de fonctionnement et de la première carte d'ouverture (M1), si le premier degré d'ouverture cible est plus petit qu'un premier degré d'ouverture cible d'évitement de surpression prédéterminé, commander le dispositif de commutation de régulation de turbine (5c, 31c) vers le premier degré d'ouverture cible d'évitement de surpression, et
commander le dispositif de commutation de régulation de turbine (5c, 31c) vers le premier degré d'ouverture cible, si le premier degré d'ouverture cible n'est pas inférieur au premier degré d'ouverture cible d'évitement de surpression.
